# EUROPEAN PATENT APPLICATION

(11) **EP 4 737 168 A1**
(43) Date of publication of application: **06.05.2026**
(21) Application number: 24831403.1
(22) Date of filing: 01.05.2024
(51) Int. Cl.: B60K 8/00, B60K 15/01, H01M 8/00, H01M 8/04

(54) **WORK VEHICLE**

(30) Priority: 30.06.2023 JP 2023107684
(71) Applicant: Kubota Corporation, Osaka 556-8601 (JP)
(72) Inventor: MINAMIDE, Yuki, Sakai-shi, Osaka 590-0908 (JP); OHNISHI, Teppei, Sakai-shi, Osaka 590-0908 (JP); NAKAMURA, Kimihiro, Sakai-shi, Osaka 590-0908 (JP); HATAKENAKA, Yusuke, Sakai-shi, Osaka 590-0908 (JP)
(74) Representative: Cabinet Beau de Loménie
(86) International application number: PCT/JP2024/016832
(87) International publication number: WO 2025/004530

(57) **Abstract**

The present disclosure relates to a work vehicle. A work vehicle of the present disclosure includes: a vehicle body; an electric motor and a fuel cell module each installed on the vehicle body; a hood covering the fuel cell module; a hydrogen pipe through which hydrogen is supplied into the hood; and a hydrogen sensor configured to detect hydrogen. The hydrogen sensor is fixed to an outer surface of the fuel cell module.

## Description

### TECHNICAL FIELD

The present disclosure relates to a work vehicle.

### BACKGROUND ART

A work vehicle including an electric motor and a battery has conventionally been known (see Patent Literature 1). In the work vehicle disclosed in Patent Literature 1, the battery is disposed in a hood. The work vehicle disclosed in Patent Literature 1 is a tractor.

### CITATION LIST

### [PATENT LITERATURE]

PATENT LITERATURE 1: Japanese Laid-Open Patent Publication No. 2022-060655

### SUMMARY OF THE INVENTION

A work vehicle according to an aspect of the present disclosure includes: a vehicle body; an electric motor and a fuel cell module each installed on the vehicle body; a hood covering the fuel cell module; a hydrogen pipe through which hydrogen is supplied into the hood; and a hydrogen sensor configured to detect hydrogen, and the hydrogen sensor is fixed to an outer surface of the fuel cell module.

According to the present disclosure, it is possible to easily dispose a hydrogen sensor near a fuel cell module in a hood. It is therefore possible to detect leakage of hydrogen in a hood of a work vehicle including a fuel cell module and an electric motor.

### BRIEF DESCRIPTION OF DRAWINGS

[FIG. 1] FIG. 1 is a perspective view illustrating a work vehicle according to an embodiment of the present disclosure.
[FIG. 2] FIG. 2 is a front view illustrating the work vehicle according to the embodiment of the present disclosure.
[FIG. 3] FIG. 3 is a rear view illustrating the work vehicle according to the embodiment of the present disclosure.
[FIG. 4] FIG. 4 is a right side view illustrating the work vehicle according to the embodiment of the present disclosure.
[FIG. 5] FIG. 5 is a left side view illustrating the work vehicle according to the embodiment of the present disclosure.
[FIG. 6] FIG. 6 is a plan view illustrating the work vehicle according to the embodiment of the present disclosure.
[FIG. 7] FIG. 7 is a bottom view illustrating the work vehicle according to the embodiment of the present disclosure.
[FIG. 8] FIG. 8 is a partially exploded perspective view illustrating the work vehicle of the present disclosure.
[FIG. 9] FIG. 9 is a left side view of the work vehicle from which some components are removed.
[FIG. 10] FIG. 10 is an explanatory view of a layout of hydrogen supply pipes in the work vehicle.
[FIG. 11] FIG. 11 is an explanatory view of an arrangement of a hydrogen sensor and a hinge near a fuel cell.
[FIG. 12] FIG. 12 is a plan view illustrating a positional relationship between the hydrogen sensor and each of a hood and a cover.
[FIG. 13] FIG. 13 is a perspective view illustrating the positional relationship between the hydrogen sensor and each of the hood and the cover.
[FIG. 14] FIG. 14 is a partially enlarged left side view illustrating the positional relationship between the hydrogen sensor and each of the hood and the cover.
[FIG. 15] FIG. 15 is an explanatory view of the hydrogen sensor, a bracket, and the hinge.
[FIG. 16] FIG. 16 is an explanatory view of a state in which the hinge supports the hood.

### DETAILED DESCRIPTION

### <Problems to be solved by the invention>

Consideration has recently been given to work vehicles that travel in such a manner that an electric motor is driven using electric power generated from hydrogen as fuel by a fuel cell module. It has been considered for such work vehicles to place a fuel cell module in a space in a hood where an engine has conventionally been placed. It has been desired for such work vehicles to detect leakage of hydrogen in a hood.

An object of the present disclosure is to enable detection of leakage of hydrogen in a hood of a work vehicle including a fuel cell module and an electric motor.

### <Advantageous effect of the invention>

According to a work vehicle of the present disclosure, it is possible to easily dispose a hydrogen sensor near a fuel cell module in a hood. It is therefore possible to detect leakage of hydrogen in a hood of a work vehicle including a fuel cell module and an electric motor.

### <Outline of embodiments of the present disclosure>

An outline of below-listed embodiments of the present disclosure is described.
(1) A work vehicle according to the present embodiment includes: a vehicle body; an electric motor and a fuel cell module each installed on the vehicle body; a hood covering the fuel cell module; a hydrogen pipe through which hydrogen is supplied into the hood; and a hydrogen sensor configured to detect hydrogen, and the hydrogen sensor is fixed to an outer surface of the fuel cell module.

According to the work vehicle of the present embodiment, it is possible to easily dispose the hydrogen sensor near the fuel cell module in the hood. It is therefore possible to detect leakage of hydrogen in the hood of the work vehicle including the fuel cell module and the electric motor.

(2) Preferably, in the work vehicle of the present embodiment, the hydrogen sensor is fixed to an upper side of the outer surface of the fuel cell module. This enables the hydrogen sensor to reliably detect hydrogen rising upwards in the event of a leak.

(3) Preferably, in the work vehicle of the present embodiment, the hydrogen sensor is fixed to the upper side of the outer surface with a bracket supporting the hydrogen sensor. According to the work vehicle having this configuration, it is possible to easily dispose the hydrogen sensor near the fuel cell module.

(4) Preferably, the work vehicle of the present embodiment further includes: a hood covering the fuel cell module; and a hinge supporting the hood so that the hood is openable and closable, and the hinge is fixed to the bracket. According to the work vehicle having this configuration, there is no necessity to separately provide a frame for supporting the hinge; therefore, it is possible to omit a frame exclusively for the hinge. It is thus possible to reduce the entire length of the work vehicle.

(5) Preferably, in the work vehicle of the present embodiment, the hinge is disposed on an upper side of the fuel cell module. According to the work vehicle having this configuration, it is possible to easily dispose the hinge supporting the hood so that the hood is openable and closable, using the bracket supporting the hydrogen sensor.

(6) Preferably, in the work vehicle of the present embodiment, the fuel cell module further includes a connection port to which the hydrogen pipe is connected, the connection port being located in the outer surface, and the hydrogen sensor is fixed to the outer surface at a position above the connection port. According to the work vehicle having this configuration, it is possible to easily dispose the hydrogen sensor in a region where hydrogen is likely to leak. It is thus possible to reliably detect leakage of hydrogen in the hood.

### <Details of embodiments of the present disclosure>

Details of embodiments of the present disclosure are described below with reference to the drawings. It should be noted that at least some of the embodiments described below may be arbitrarily combined with each other.

### [Overall configuration of work vehicle]

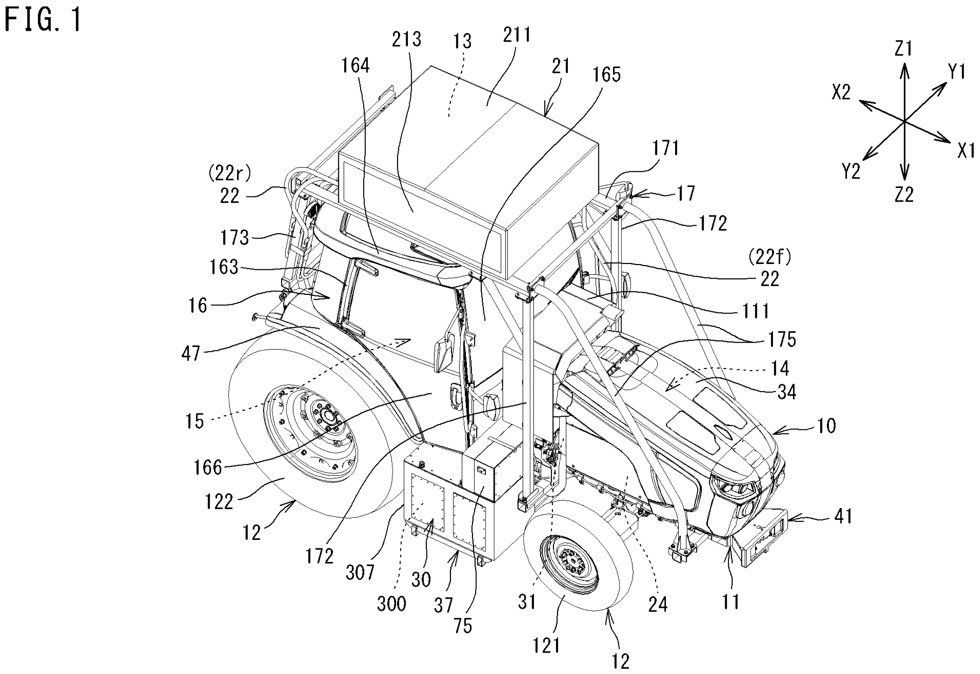

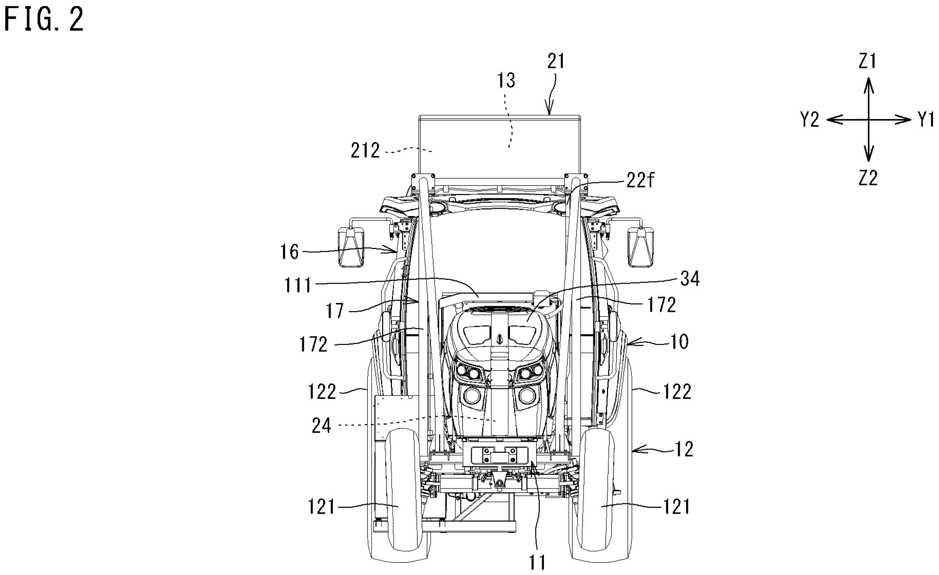

FIG. 1 is a perspective view illustrating a work vehicle according to an embodiment of the present disclosure. FIGs. 2, 3, 4, 5, 6, and 7 are respectively a front view, a rear view, a side view (a left side view), a side view (a right side view), a plan view, and a bottom view of the work vehicle illustrated in FIG. 1.

A work vehicle 10 of the present embodiment is a vehicle that can be used for farmwork. The work vehicle 10 illustrated in FIG. 1 is a tractor. The work vehicle is not limited to a tractor. Examples of the work vehicle according to the present invention may include an agricultural machine different from a tractor, a construction machine, a utility vehicle, and the like.

The following terminology defines the directions of the work vehicle 10 of the present disclosure. The term "front" refers to the direction in which the work vehicle 10 travels forward. The term "rear" refers to the direction in which the work vehicle 10 travels backward. The term "left" refers to the left side when the work vehicle 10 is directed forward. The term "right" refers to the right side when the work vehicle 10 is directed forward. The term "vehicle-width direction" refers to the left-right direction perpendicular to the front-rear direction. The term "up-down direction" refers to the direction perpendicular to both the front-rear direction and the vehicle-width direction (the left-right direction). The up-down direction is also referred to as the height direction.

Each drawing depicts an orthogonal three-dimensional coordinate system. In each drawing, arrow X1 indicates the forward direction, and arrow X2 indicates the rearward direction. Also in each drawing, arrow Y1 indicates the leftward direction, and arrow Y2 indicates the rightward direction. Also in each drawing, arrow Z1 indicates the upward direction, and arrow Z2 indicates the downward direction.

The work vehicle 10 illustrated in FIG. 1 includes a vehicle body 11, a traveling device 12 supporting the vehicle body 11 in a travelable manner, a driver's seat 15, a cabin 16, a tank unit 21 including a tank 13 configured to store fuel, and a drive device 14 to be driven using the fuel stored in the tank 13. The fuel is hydrogen. The tank 13 is a hydrogen tank configured to store hydrogen gas. The work vehicle 10 of the present embodiment is a fuel cell vehicle (FCV) and travels using electric power generated from hydrogen and oxygen by a fuel cell 24 (a fuel cell module).

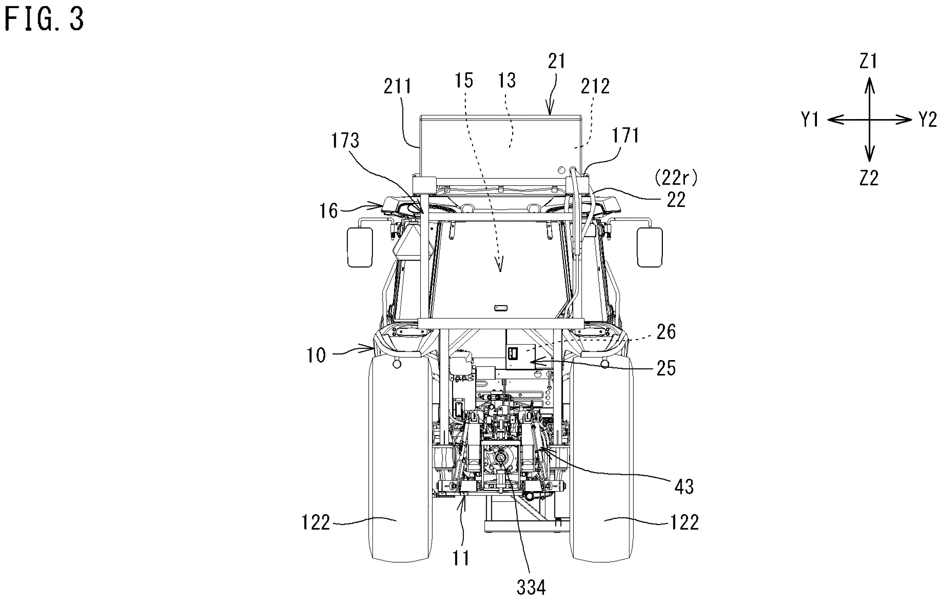

The work vehicle 10 includes, as the drive device 14, the fuel cell 24, a battery unit 30, and a motor 31 to be electrically driven. The battery unit 30 includes a battery 300 configured to store electric power generated by the fuel cell 24, and supplies the stored electric power to the motor 31. The work vehicle 10 includes pipes 22 for hydrogen gas (hydrogen pipes) and a filling unit 25 (see FIG. 3). The filling unit 25 has a filling port 26 (a receptacle) to which a filling nozzle of a hydrogen gas supply machine (not illustrated) is connected. The hydrogen gas supply machine is provided separately from the work vehicle 10. Hydrogen gas supplied from the hydrogen gas supply machine through the filling port 26 flows through one of the pipes 22 (a rear pipe 22r) and reaches the tank 13. The hydrogen gas stored in the tank 13 flows through the other pipe 22 (a front pipe 22f) and reaches the fuel cell 24. The specific configurations of the filling unit 25 and pipes 22 are described below.

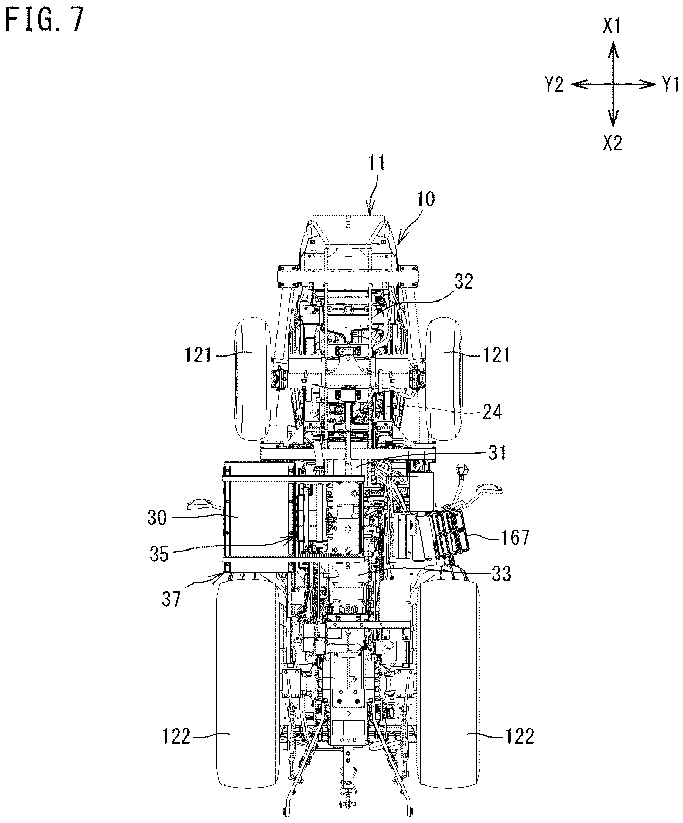

The work vehicle 10 (see FIG. 1) includes an installation frame 17 and a support structure 37. The installation frame 17 is a frame with which the tank unit 21 (the tank 13) is installed on the vehicle body 11. The support structure 37 is a component with which the battery unit 30 is supported on the vehicle body 11. The work vehicle 10 (see FIG. 7) includes a discharge path 35. The discharge path 35 serves as a path through which water or water vapor generated due to the operation of the fuel cell 24 is discharged externally. The specific configurations of the installation frame 17, support structure 37, and discharge path 35 are described below.

### [Vehicle body 11]

The vehicle body 11 includes a chassis 41, a hood 34, a cover 111, and fenders 47 with which rear wheels 122 are covered from above.

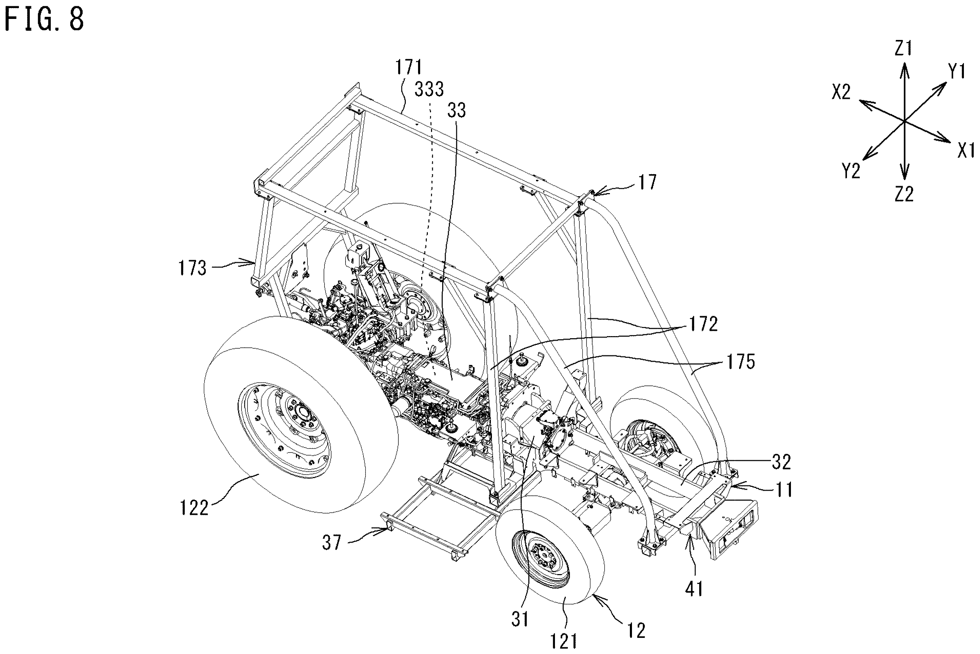

The chassis 41 supports the traveling device 12, the drive device 14, and the cabin 16. FIG. 8 is a partially exploded perspective view of the work vehicle 10 illustrated in FIG. 1. The chassis 41 is located at a center in the vehicle-width direction, and has a shape elongated in the vehicle front-rear direction. The chassis 41 includes a front frame 32 constituting a front portion of the chassis 41, and a gear case 33 constituting a rear portion of the chassis 41. The front frame 32 is a combination of, for example, frame members made of a metal. The gear case 33 has a box body made of a metal. The gear case 33 is coupled to a rear portion of the front frame 32. The gear case 33 and the front frame 32 form a framework of the vehicle body 11.

The motor 31 is installed on the front frame 32. A power transmission mechanism 333 is accommodated in the gear case 33. The power transmission mechanism 333 includes a transmission, a clutch, a differential gear, and the like. The power transmission mechanism 333 decreases or increases a rotation speed of an output shaft of the motor 31, and outputs the resultant motive power to the traveling device 12 (front wheels 121 and/or the rear wheels 122).

The power transmission mechanism 333 outputs part of the motive power from the motor 31 to a PTO shaft 334 (see FIG. 3). The PTO shaft 334 is an output shaft disposed on a rear portion of the gear case 33. The work vehicle 10 includes a coupling device 43 configured to couple a separate instrument to the rear of the vehicle body 11. The PTO shaft 334 transmits the motive power from the motor 31 to the separate instrument coupled to the coupling device 43. The separate instrument is a working device (not illustrated) and is also referred to as an implement. The working device is operated by the motive power from the motor 31. The working device is, for example, a cultivator.

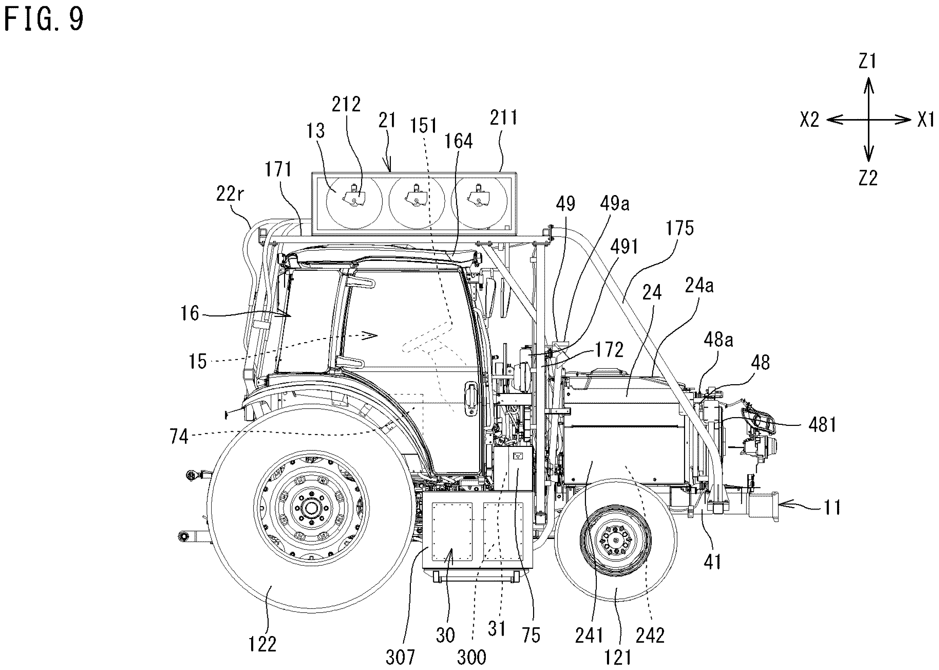

FIG. 9 is a left side view of the work vehicle 10, and illustrates the work vehicle 10 from which the hood 34, the cover 111, and a part of a tank case 211 of the tank unit 21 are removed. A first radiator 48, the fuel cell 24, and a second radiator 49 are arranged in this order from the front of the vehicle, and are installed on the chassis 41.

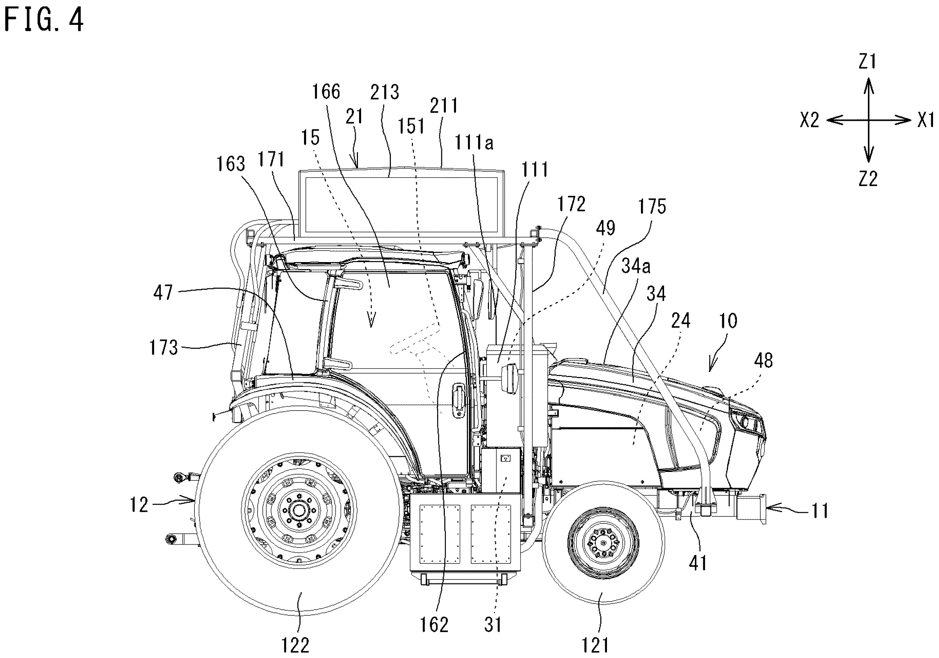

As illustrated in FIGs. 4 and 9, the hood 34 and the cover 111 cover the installed components located near the front of the vehicle body 11. The hood 34 covers the fuel cell 24 and the first radiator 48 from above and laterally in the vehicle-width direction. The cover 111 covers the second radiator 49, which is located rearward of the fuel cell 24, from above and laterally in the vehicle-width direction.

An upper surface 48a of the first radiator 48 is lower in height than an upper surface 24a of the fuel cell 24. The upper surface 24a of the fuel cell 24 is lower in height than an upper surface 49a of the second radiator 49.

An upper surface 111a of the cover 111 is higher in height than an upper surface 34a of the hood 34, but is lower in height than an upper end of a steering wheel 151 to be operated for the sake of steering by an operator sitting in the driver's seat 15. The upper surface 34a of the hood 34 is gradually inclined downward from the rear toward the front. This configuration is less likely to obstruct the field of view of the operator sitting in the driver's seat 15.

### [Driver's seat 15 and cabin 16]

The driver's seat 15 and the cabin 16 are disposed on the chassis 41 and located near the rear (see FIG. 1). The driver's seat 15 is located within the cabin 16.

The cabin 16 includes front pillars 162 located forward of the driver's seat 15, rear pillars 163 located rearward of the driver's seat 15, and a roof 164 located above the driver's seat 15. One of the front pillars 162 is disposed diagonally in front to the left of the driver's seat 15, and the other front pillar 162 is disposed diagonally in front to the right of the driver's seat 15. One of the rear pillars 163 is disposed diagonally behind to the left of the driver's seat 15, and the other rear pillar 163 is disposed diagonally behind to the right of the driver's seat 15. The roof 164 is supported by the front pillars 162 and the rear pillars 163.

The cabin 16 includes a windshield 165 located forward of the driver's seat 15. The windshield 165 is disposed between the left and right front pillars 162. The cabin 16 includes doors 166 that are openable and closable. The doors 166 are respectively disposed on opposite sides in the vehicle-width direction. Each of the doors 166 is disposed between a corresponding one of the front pillars 162 and a corresponding one of the rear pillars 163.

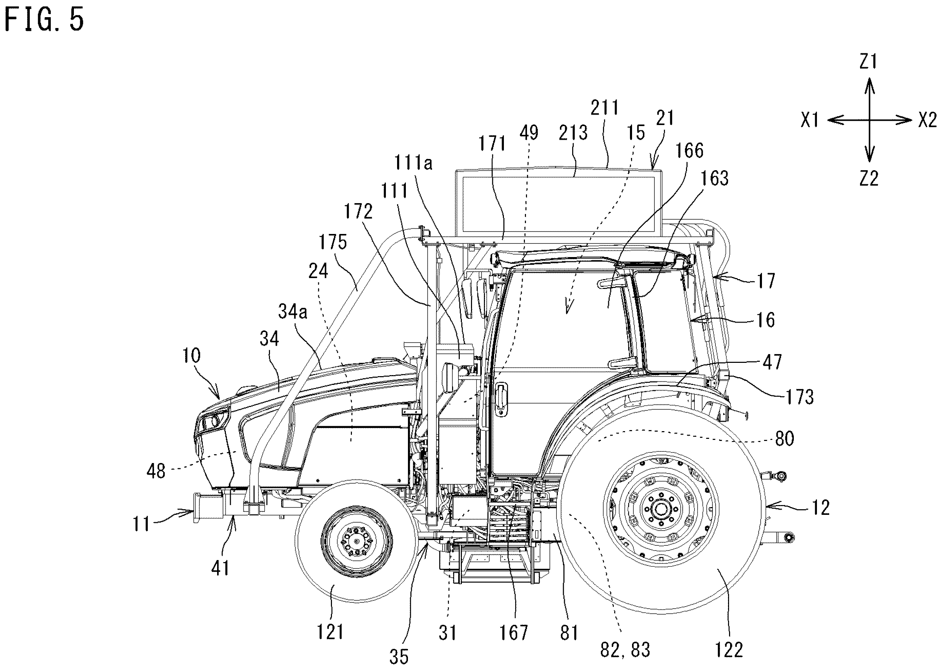

The cabin 16 has a step 167 on its one side (left side) in the width direction of the vehicle body (see FIG. 5). The step 167 is a member on which the operator puts his/her foot when entering and leaving the cabin 16.

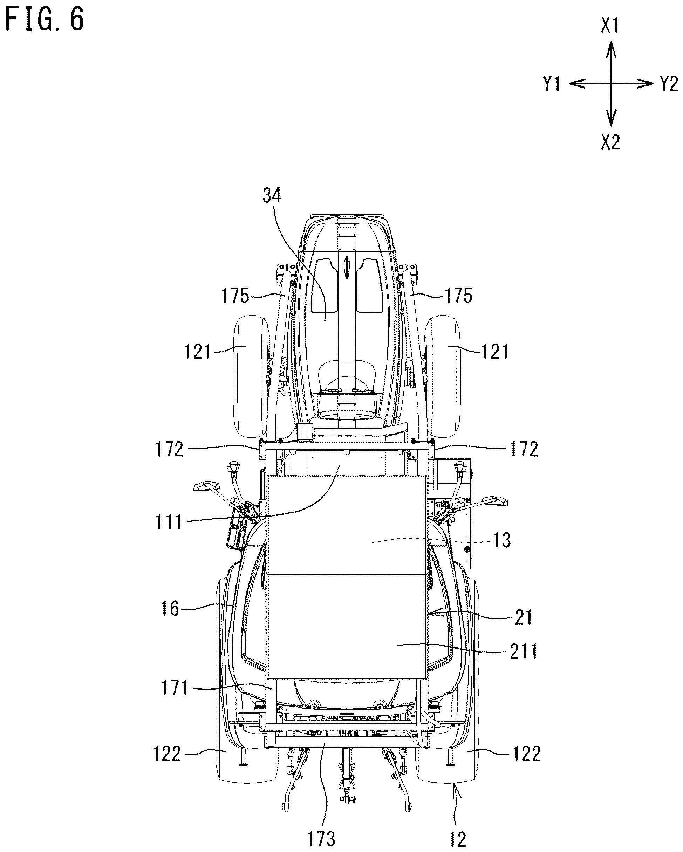

The cover 111 and the hood 34 are disposed forward of the cabin 16. As illustrated in FIGs. 2 and 6, each of the cover 111 and the hood 34 is smaller in dimension in the vehicle-width direction than the cabin 16. The hood 34 is smaller in dimension in the vehicle-width direction than the cover 111.

The work vehicle 10 of the present embodiment includes the cabin 16, but does not necessarily include the cabin 16. The work vehicle 10 may include, in place of the cabin 16, a canopy or a rollover protective structure (ROPS). If the work vehicle 10 does not include the cabin 16, the tank unit 21 is supported by the installation frame 17 and is located above the driver's seat 15.

### [Traveling device 12]

The traveling device 12 includes the front wheels 121 and the rear wheels 122 (see FIG. 6). The front wheels 121 are respectively disposed leftward and rightward of a front portion of the vehicle body 11. The rear wheels 122 are respectively disposed leftward and rightward of a rear portion of the vehicle body 11. The maximum dimension between the left and right rear wheels 122 in the vehicle-width direction is larger than the maximum dimension between the left and right front wheels 121 in the vehicle-width direction. The maximum dimension between the left and right rear wheels 122 in the vehicle-width direction corresponds to the maximum width dimension of the work vehicle 10.

The front wheels 121 and/or the rear wheels 122 are rotated by the motive power from the motor 31. The front wheels 121 and/or the rear wheels 122 to be rotated by the motive power from the motor 31, i.e., the driving wheels may be crawlers (continuous track).

### [Drive device 14]

As described above, the drive device 14 includes the fuel cell 24, the battery unit 30, and the motor 31.

The fuel cell 24 is disposed on the chassis 41 and located near the front of the vehicle body 11 (see FIG. 9). The motor 31 is located rearward of the fuel cell 24 (see FIG. 8). The battery unit 30 is located outward of the vehicle body 11 in the vehicle-width direction (see FIG. 1). The battery unit 30 is attached to the chassis 41 with the support structure 37.

The fuel cell 24 generates electric power from hydrogen gas in order to rotate the motor 31. The fuel cell 24 (see FIG. 9) includes a cell casing 241 having an approximately rectangular box shape, and a fuel cell stack 242 disposed in the cell casing 241. The fuel cell stack 242 includes a plurality of battery cells. The plurality of battery cells each include a cathode and an anode. A plurality of single cells are in a stacked state. Electric power is generated by each of the plurality of battery cells and is collectively output to the battery unit 30.

The motor 31 includes a rotor configured to rotate and a stator including a plurality of coils. The motor 31 includes an output shaft coupled to the power transmission mechanism 333 in the gear case 33 (see FIG. 8). The motor 31 is located rearward of the fuel cell 24 and below the second radiator 49.

### [Tank unit 21]

The tank unit 21 (see FIG. 9) includes the tank 13 and the tank case 211 accommodating the tank 13. The tank 13 is a high-pressure container having an approximately cylindrical shape. The tank 13 is made of, for example, a fiber-reinforced resin reinforced with carbon fibers or glass fibers. In the present embodiment, three tanks 13 each having a cylindrical shape are fixed to the tank case 211 with their axial directions oriented in parallel with the vehicle-width direction. The number of tanks 13 is not limited to three.

The tank case 211 is a box body capable of accommodating the tank(s) 13. The tank case 211 has a box shape covering the entire tank(s) 13 accommodated therein. The tank case 211 includes an openable/closable door 213 (see FIG. 1) disposed on one side or each side of the tank case 211 in the vehicle-width direction, so that the tank case 211 is openable in the vehicle-width direction. The tank case 211 is disposed above the roof 164, i.e., spaced apart from the roof 164 in the up-down direction. The tank case 211 is fixed to an upper frame portion 171 of the installation frame 17. The tank case 211 is made of a metal such as aluminum or steel to protect the tank 13 from external thermal and physical influences.

The tank 13 is disposed above the cabin 16 (the driver's seat 15). Therefore, the fuel cell 24, the filling unit 25, the motor 31, and the battery unit 30 are arranged in the vehicle body 11 with a great degree of freedom. In a case where a conventional internal combustion engine-equipped work vehicle is converted into the work vehicle 10 including the fuel cell 24 and the motor 31, which is described in the present embodiment, there is no necessity to largely change the arrangement of the respective components.

The tank 13 is coupled to the rear pipe 22r and the front pipe 22f via a valve unit 212 (see FIG. 9). The rear pipe 22r (see FIG. 3) is a gas inlet channel connecting the filling port 26 for hydrogen gas and the valve unit 212 to guide the hydrogen gas from the filling port 26 toward the tank 13. The front pipe 22f (see FIG. 2) is a gas outlet channel connecting the fuel cell 24 and the valve unit 212 to guide the hydrogen gas in the tank 13 toward the fuel cell 24. The hydrogen gas that is introduced from the outside of the vehicle through the filling port 26 is stored in the tank 13 and is supplied to the fuel cell 24. The valve unit 212 includes, for example, an open-close valve and a reducing valve. The valve unit 212 adjusts a flow rate of the hydrogen gas stored in the tank 13 to a predetermined value. The hydrogen gas the flow rate of which has been adjusted is guided to the fuel cell 24 through the front pipe 22f.

### [Installation frame 17]

The installation frame 17 (see FIG. 1) is a frame structure with which the tank 13 is installed on the vehicle body 11. The installation frame 17 of the present embodiment includes the upper frame portion 171 supporting the tank 13 as well as first front frame portions 172, second front frame portions 175, and a rear frame portion 173 forming a frame for supporting the upper frame portion 171. The tank case 211 is attached to the upper frame portion 171. In other words, the upper frame portion 171 supports the tank 13 via the tank case 211. The specific configuration of the installation frame 17 is described below.

The filling unit 25 is disposed on the rear frame portion 173 (see FIG. 3). The filling unit 25 has the filling port 26 to which the gas filling nozzle of the hydrogen gas supply machine (not illustrated), which is placed separately from the vehicle, is connected in filling the tank 13 with hydrogen gas.

### [Radiator]

The work vehicle 10 (see FIGs. 4 and 5) includes a cooling system for cooling the fuel cell 24, the motor 31, a step-up circuit 80, an inverter 81, DC/DC converters 82 and 83, and the like with a coolant. The work vehicle 10 includes the first radiator 48 and the second radiator 49 each constituting a part of the cooling system. As illustrated in FIG. 9, the first radiator 48 is located forward of the fuel cell 24, and the second radiator 49 is located rearward of the fuel cell 24.

The first radiator 48 is a radiator configured to cool the components other than the fuel cell 24. The second radiator 49 is a radiator configured to cool the fuel cell 24.

The first radiator 48 is connected to electrical components (heat generating components) to be cooled, for the motor 31, the step-up circuit 80, the inverter 81, and the DC/DC converters 82 and 83, via a first cooling flow channel (not illustrated) provided with a circulation pump. The first radiator 48 cools the coolant supplied thereto via the first cooling flow channel, by heat exchange with outside air.

The second radiator 49 is connected to the fuel cell 24 via a second cooling flow channel (not illustrated) provided with a circulation pump. The second radiator 49 cools the coolant supplied thereto via the second cooling flow channel, by heat exchange with outside air.

The first radiator 48 includes a first fan 481. The second radiator 49 includes a second fan 491. The first fan 481 encourages the heat exchange with the coolant by its rotation that allows air to pass through the first radiator 48. The second fan 491 encourages the heat exchange with the coolant by its rotation that allows air to pass through the second radiator 49.

### [Battery unit 30]

The battery unit 30 stores electric power to be supplied to the motor 31. The battery unit 30 (see FIG. 9) includes the battery 300 (a battery pack) and a housing 307 accommodating the battery 300. The battery 300 temporarily stores the electric power generated by the fuel cell 24, and outputs the electric power to an electric device such as the motor 31. The battery 300 includes a plurality of battery cells. The battery 300 is a rechargeable secondary battery such as a lithium-ion battery or a lead-acid battery.

### [Electrical system]

The work vehicle 10 includes a junction box 75. The junction box 75 is an electrical connection box for relay connection and distribution of the electric power output from the battery unit 30.

The fuel cell 24 is connected to the inverter 81 (see FIG. 5) via the step-up circuit. The battery unit 30 is connected to the inverter 81 via the junction box 75. The inverter 81 is electrically connected to the motor 31. The inverter 81 converts DC electric power output from the step-up circuit into three-phase AC electric power, and outputs the three-phase AC electric power to the motor 31.

The work vehicle 10 includes a low-voltage electrical component operable at a voltage lower than a voltage at which the motor 31 operates. The low-voltage electrical component receives electric power stepped down by a step-down circuit, via the junction box 75. The work vehicle 10 of the present embodiment includes, as the low-voltage electrical component, the battery unit 30, the radiators 48 and 49, and an air conditioner 74. The work vehicle 10 includes, as the step-down circuit, the first DC/DC converter 82 and the second DC/DC converter 83.

### [Arrangement of hydrogen sensor]

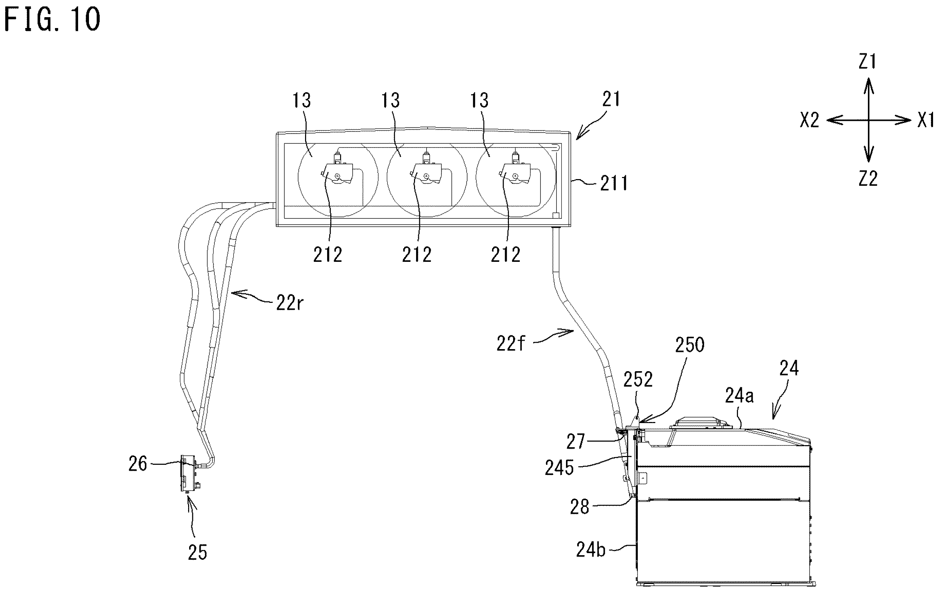

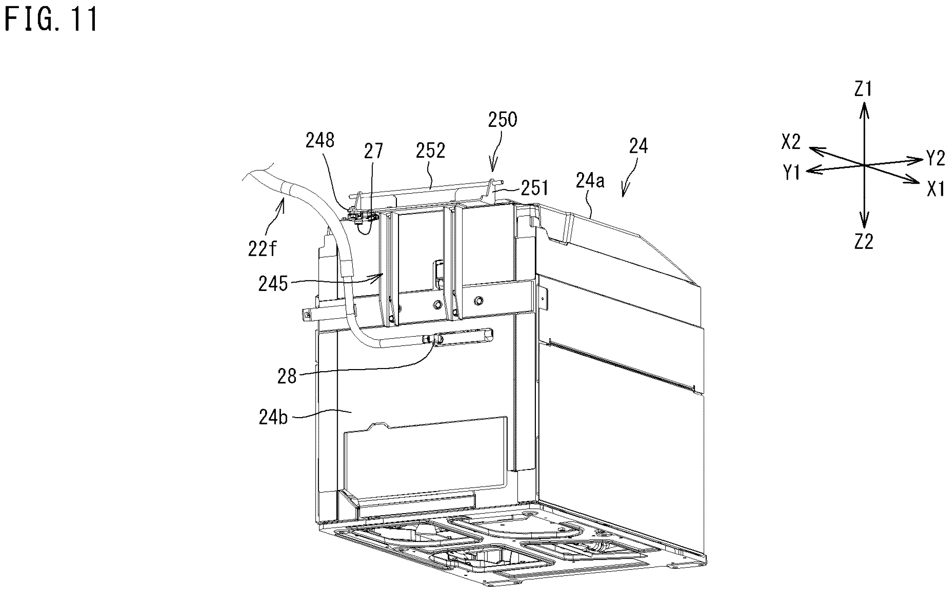

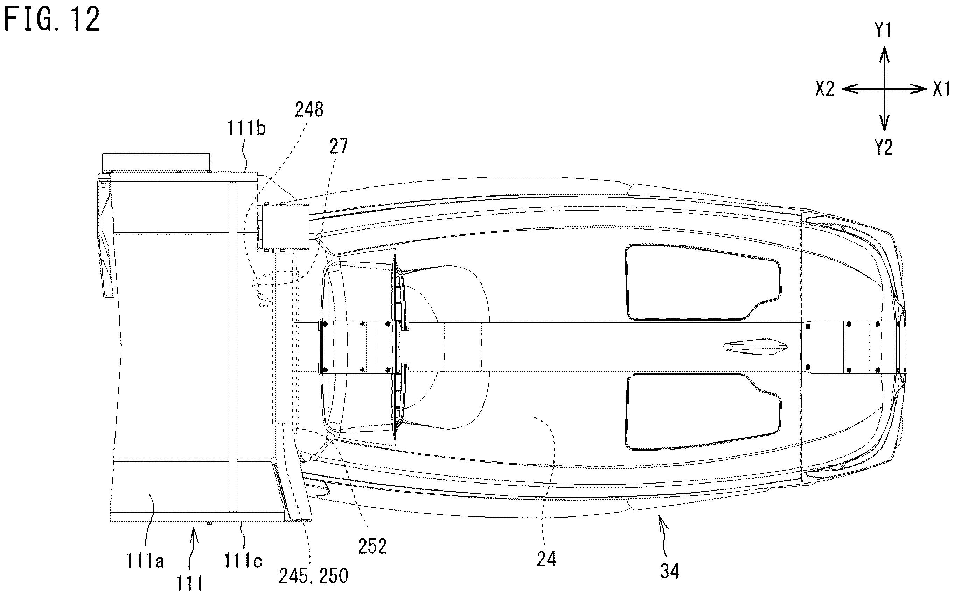

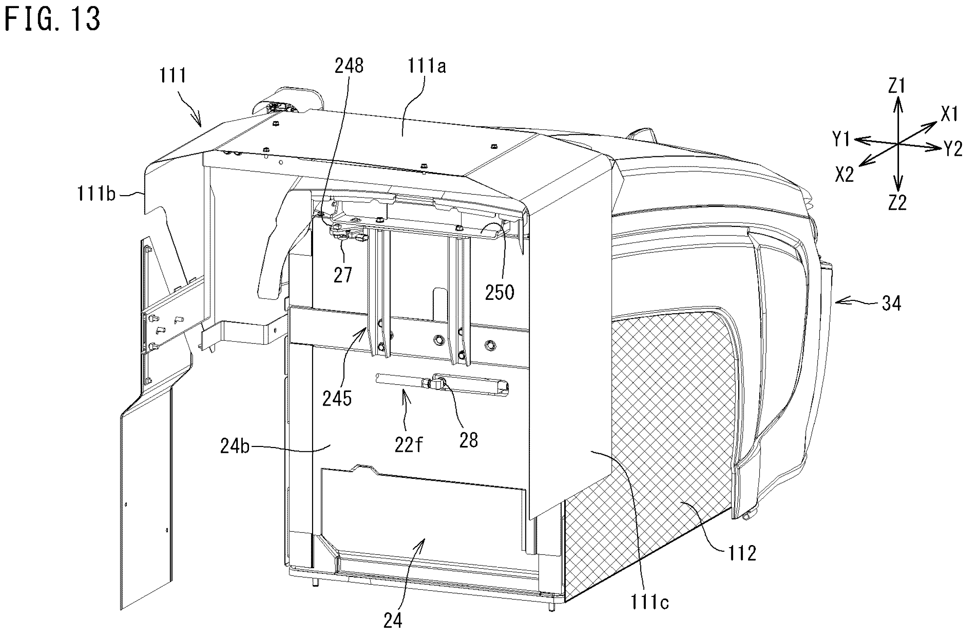

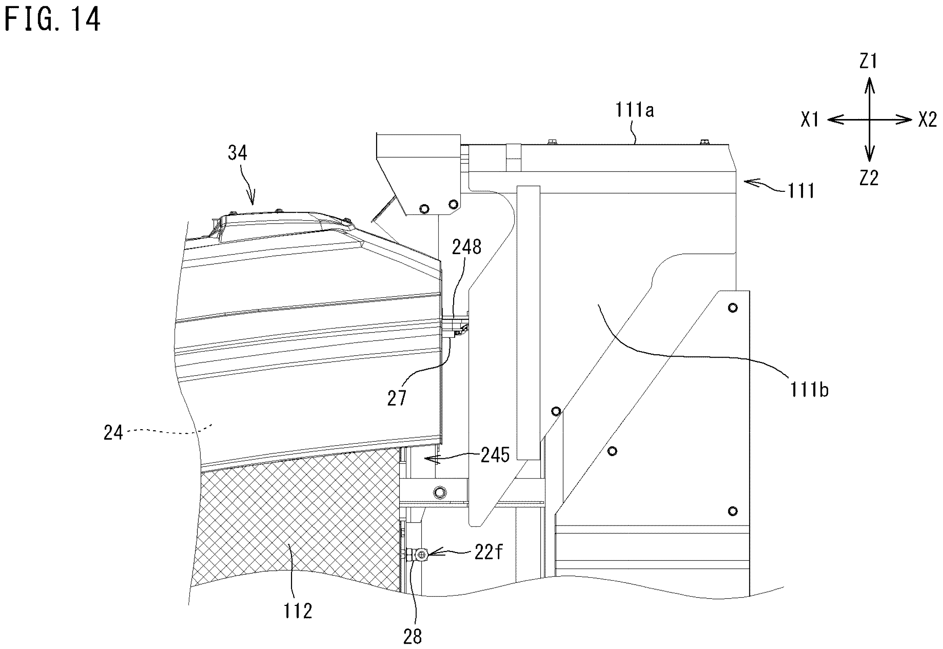

FIG. 10 is an explanatory view of a layout of the hydrogen supply pipes in the work vehicle. FIG. 11 is an explanatory view of an arrangement of a hydrogen sensor and a hinge near the fuel cell. FIG. 12 is a plan view illustrating a positional relationship between the hydrogen sensor and each of the hood and the cover. FIG. 13 is a perspective view illustrating the positional relationship between the hydrogen sensor and each of the hood and the cover. FIG. 14 is a partially enlarged left side view illustrating the positional relationship between the hydrogen sensor and each of the hood and the cover. As illustrated in FIGs. 10 and 11, the work vehicle 10 of the present disclosure includes the rear pipe 22r through which hydrogen supplied from the filling unit 25 through the filling port 26 is introduced into the tank 13 via the valve unit 212, and the front pipe 22f extending from the tank 13 to the fuel cell 24 via the valve unit 212. The fuel cell 24 includes a connection port 28 to which the front pipe 22f is connected. The connection port 28 is formed in a rear surface 24b of the fuel cell 24. The rear surface 24b corresponds to a rear outer surface of the fuel cell 24.

The work vehicle 10 includes a hydrogen sensor 27 configured to detect leakage of the hydrogen supplied to the fuel cell 24 through the front pipe 22f. The hydrogen sensor 27 is fixed to the rear surface 24b of the fuel cell 24 at a position above the connection port 28. In the work vehicle 10, the hydrogen sensor 27 is located above the connection port 28 so as to easily detect the hydrogen if the hydrogen leaks from the connection port 28. The hydrogen sensor 27 may be fixed to a different outer surface of the fuel cell 24 from the rear surface 24b.

As illustrated in FIGs. 12 to 14, the work vehicle 10 includes the cover 111 covering a rear portion of the fuel cell 24, a rear portion of the hood 34, and the second radiator 49 (see FIG. 5). The cover 111 has the upper surface 111a, a left side surface 111b, and a right side surface 111c. The upper surface 111a is located above the hood 34. The left side surface 111b is located leftward of the hood 34. The right side surface 111c is located rightward of the hood 34. The left and right sides of the fuel cell 24 are partially covered with mesh side covers 112.

As illustrated in FIG. 12, the cover 111 is located such that the connection port 28 and the hydrogen sensor 27 are covered with the upper surface 111a from above as seen in plan view. According to this configuration, if the hydrogen leaks from the connection port 28, the leaked hydrogen flows upward from the connection port 28 in a space defined between the rear surface 24b of the fuel cell 24 and the second radiator 49, i.e., rises within the cover 111.

As illustrated in FIGs. 12 and 13, in the work vehicle 10, the upper surface 111a, left side surface 111b, and right side surface 111c of the cover 111 are located near the hydrogen sensor 27. As illustrated in FIG. 14, a part of the hydrogen sensor 27 is located (in a space defined) between a rear end of the hood 34 and the cover 111 as seen in side view. The hydrogen sensor 27 may be surrounded with the upper surface 111a, left side surface 111b, and right side surface 111c of the cover 111, or may be surrounded with the hood 34.

According to the work vehicle 10, the hydrogen sensor 27 enables detection of hydrogen that leaks from the connection port 28. According to the work vehicle 10, furthermore, the hydrogen sensor 27 is located on an upper side of the space defined by the cover 111 and is therefore capable of reliably detecting hydrogen rising within the cover 111.

In the work vehicle 10 of the present disclosure, the hydrogen sensor 27 is fixed to the fuel cell 24. According to the work vehicle 10 having this configuration, it is possible to easily dispose the hydrogen sensor 27 near the fuel cell 24. It is therefore possible to save a space in the hood 34 of the work vehicle 10 including the fuel cell 24 and the motor 31.

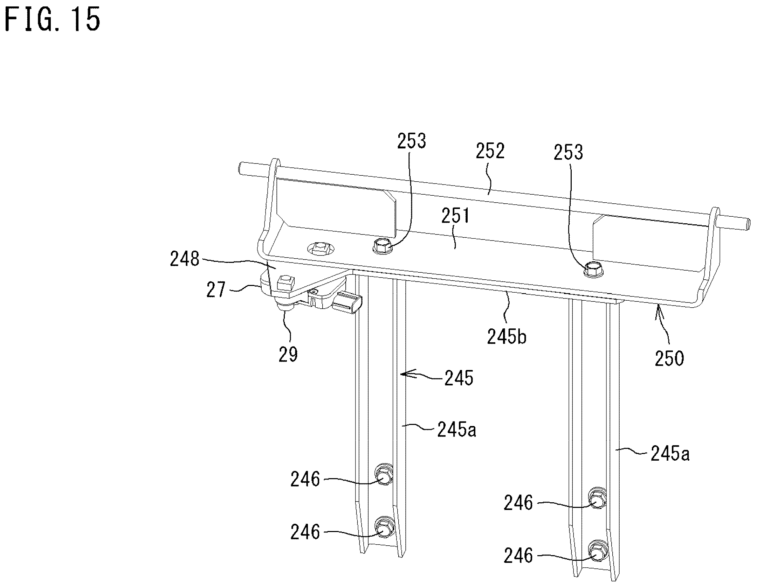

FIG. 15 is an explanatory view of the hydrogen sensor, a bracket, and the hinge. As illustrated in FIGs. 10 to 15, the work vehicle 10 of the present disclosure includes a bracket 245. The bracket 245 is made of a steel material and is fixed to the rear surface 24b of the fuel cell 24. In the work vehicle 10, the hydrogen sensor 27 is fixed to the rear surface 24b of the fuel cell 24 with the bracket 245.

As illustrated in FIG. 15, the bracket 245 includes two first members 245a extending in the up-down direction and one second member 245b extending in the left-right direction. The bracket 245 is formed in a single body with the second member 245b connecting upper ends of the two first members 245a. The bracket 245 is fixed to the fuel cell 24 in such a manner that a plurality of bolts 246 are inserted through a plurality of threaded holes in each of the first members 245a and then are screwed into a plurality of threaded holes (not illustrated) in the rear surface 24b of the fuel cell 24. The bracket 245 is fixed to the fuel cell 24, using the threaded holes (not illustrated) originally formed in the fuel cell 24. Therefore, there is no necessity to change the shapes and structures of the frame and casing of the fuel cell 24.

The second member 245b further includes an extended portion 248 located on a left end of the second member 245b so as to extend rearward. The extended portion 248 is used for fixing the hydrogen sensor 27 to the bracket 245. The hydrogen sensor 27 is fixed to the extended portion 248 with a screw member 29 (a combination of a bolt and a nut). The second member 245b uses a hinge (a hinge 250 described below) for supporting the hood 34 (see FIG. 1), as a member fixed to the bracket 245. According to the work vehicle 10 having this configuration, it is possible to easily dispose the hydrogen sensor 27 on the outer surface (the rear surface 24b) of the fuel cell 24 without changing the structure of the fuel cell 24.

### [Hinge]

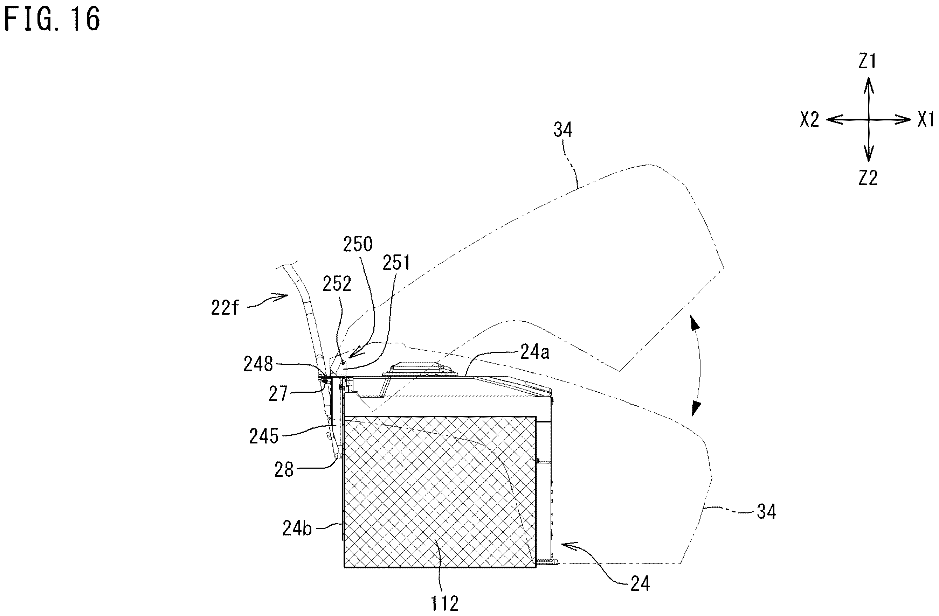

FIG. 16 is an explanatory view of a state in which the hinge supports the hood. As illustrated in FIGs. 10 to 16, the work vehicle 10 of the present disclosure includes the hinge 250 attached to an upper end of the bracket 245. The hinge 250 is a member supporting the hood 34 of the work vehicle 10, and includes a hinge body 251 and a shaft 252. The hinge 250 is fixed to an upper side of the bracket 245 in such a manner that the hinge body 251 is fastened to the second member 245b with a bolt 253 (and a nut). In the work vehicle 10, the hinge body 251 holds the shaft 252 with an axial direction of the shaft 252 oriented in the left-right direction. In the work vehicle 10, the hinge 250 is disposed on an upper side of the hood 34. As illustrated in FIG. 16, the hood 34 is supported by the shaft 252 so as to be turnable on the shaft 252. In FIG. 16, the upper hood 34 indicated by a two-dot-dash line is in an open state, and the lower hood 34 indicated by a two-dot-dash line is in a closed state.

In the work vehicle 10 of the present disclosure, the hinge 250 attached to the bracket 245 supports the hood 34 so that the hood 34 is openable and closable. In other words, the hood 34 of the work vehicle 10 is rotatably supported by the fuel cell 24 with the hinge 250 and the bracket 245.

According to the work vehicle 10 having this configuration, there is no necessity to separately provide a frame exclusively for supporting the hood 34 in the hood 34. According to the work vehicle 1, therefore, it is possible to omit the exclusive frame and to save a space around the fuel cell 24. It is thus possible to reduce the entire length of the work vehicle 10 of the present disclosure. According to this configuration, even the work vehicle 10 of the present disclosure, which includes the fuel cell 24, is capable of maintaining the maneuverability and minimum turning radius almost equal to those of a conventional (engine-equipped) work vehicle.

The foregoing embodiments are in all aspects illustrative and not restrictive. The scope of the present invention is defined by the claims rather than the foregoing embodiments, and includes all modifications within the scope of the configurations recited in the claims and their equivalences.

### REFERENCE SIGNS LIST

- 10: work vehicle
- 11: vehicle body
- 22: pipe (hydrogen pipe)
- 24: fuel cell (fuel cell module)
- 24b: rear surface (outer surface)
- 27: hydrogen sensor
- 28: connection port
- 31: motor (electric motor)
- 34: hood
- 245: bracket
- 250: hinge

## Claims

1. A work vehicle comprising:
a vehicle body;
an electric motor and a fuel cell module each installed on the vehicle body;
a hood covering the fuel cell module;
a hydrogen pipe through which hydrogen is supplied into the hood; and
a hydrogen sensor configured to detect hydrogen,
wherein
the hydrogen sensor is fixed to an outer surface of the fuel cell module.

2. The work vehicle according to claim 1, wherein
the hydrogen sensor is fixed to an upper side of the outer surface of the fuel cell module.

3. The work vehicle according to claim 2, wherein
the hydrogen sensor is fixed to the upper side of the outer surface with a bracket supporting the hydrogen sensor.

4. The work vehicle according to claim 3, further comprising
a hinge supporting the hood so that the hood is openable and closable,
wherein
the hinge is fixed to the bracket.

5. The work vehicle according to claim 4, wherein
the hinge is disposed on an upper side of the fuel cell module.

6. The work vehicle according to claim 1 or 2, wherein
the fuel cell module further includes a connection port to which the hydrogen pipe is connected, the connection port being located in the outer surface, and
the hydrogen sensor is fixed to the outer surface at a position above the connection port.
